# EUROPÄISCHE PATENTANMELDUNG

(11) **EP 2 256 689 A2**
(43) Veröffentlichungstag der Anmeldung: **01.12.2010**
(21) Anmeldenummer: 10166211.2
(22) Anmeldetag: 03.12.2008
(51) Int. Cl.: G06T 7/00

(54) **Interaktive Segmentierung von Mikroverkalkungen in einer Mammographieaufnahme**

(30) Priorität: 07.12.2007 DE 102007058968
(62) Teilanmeldung aus: 08855745.9
(71) Anmelder: Fraunhofer-Gesellschaft zur Förderung der Angewandten Forschung e.V., 80686 München (DE)
(72) Erfinder: Elter, Matthias, 91054 Erlangen (DE); Steckhan, Dirk, 81827 München (DE); Rupp, Stephan, 90765 Fürth (DE); Schlarb, Timo, 90766 Fürth (DE)
(74) Vertreter: Schenk, Markus

(57) **Zusammenfassung**

Eine Segmentierung von Mikroverkalkungen (105) in einer Mammographieaufnahme (110) wird erzielt durch Abtasten, mittels eines Strukturelementes (280), der Mammographieaufnahme (110) und Abziehen eines so erhaltenen Hintergrundes von der Mammographieaufnahme, um eine hochpassgefilterte Mammographieaufnahme zu erhalten; einem Tiefpassfiltern der hochpassgefilterten Mammographieaufnahme, um hochfrequente Rauschanteile herauszufiltern und eine gefilterte Mammographieaufnahme (130) zu erhalten; und Markieren (140) von Bildpunkten in der gefilterten Mammographieaufnahme (130), die einen vorbestimmten Schwellenwert (S) überschreiten oder unterschreiten, um potentielle Regionen von Mikroverkalkungen (105) zu markieren.

## Beschreibung

Die vorliegende Erfindung bezieht sich auf eine Vorrichtung und ein Verfahren zum Segmentieren von Mikroverkalkungen in einer Mammographieaufnahme und insbesondere auf eine Segmentierung von Mikroverkalkungen in Mammographieaufnahmen für die computer-assistierte Diagnose von Brustkrebs.

Brustkrebs ist die häufigste Krebserkrankung der Frau in der westlichen Welt. Eine von zehn Frauen in der westlichen Welt entwickelt während ihrer Lebenszeit Brustkrebs. Eine frühzeitige Erkennung und Diagnose ist heutzutage immer noch die effektivste Möglichkeit um die Sterbensrate für diese Art von Krebs zu reduzieren. Mammographieaufnahmen stellen dabei ein sehr effektives Mittel dar, um eine frühe Erkennung von kleinen, nicht tastbaren Tumorerkrankungen zu ermöglichen. Ein Nachteil in der Interpretation von Mammogrammen besteht jedoch in der Schwierigkeit zwischen gut-und bösartigen Läsionen zu unterscheiden - selbst für Experten in der Mammographie ist es eine Herausforderung die Gestalt der Läsion richtig zu interpretieren.

Die frühzeitige Diagnose der Erkrankung verbessert die Überlebenschancen der betroffenen Frauen beträchtlich. Die digitale Röntgenmammographie ist die effektivste Technik zur Diagnose von Brustkrebstumoren in einem frühen Stadium. Um die Diagnose zu vereinfachen und auch zur Verbesserung der Erkennungsrate kommen heute oftmals Systeme zur computer-assistierten Diagnose (CAD) von Mammographieaufnahmen zum Einsatz. Diese Systeme weisen den Radiologen mittels einer automatischen Analyse von Mammographieaufnahmen durch Bildverarbeitungsverfahren auf auffällige Regionen in Mammogrammen hin und bieten eine Unterstützung in der Diagnose der Läsionen - ob es sich dabei um gut- oder bösartige Tumore handelt - an.

Eine wichtige Gruppe von Brustläsionen, die in Mammographieaufnahmen gefunden werden, sind so genannten Mikroverkalkungen. Hierbei handelt es sich um, zumeist gruppiert auftretende, kleine Kalkablagerungen im Brustgewebe, die auf frühe Stadien von Brusttumoren hinweisen. Zur Erstellung eines automatischen Diagnosevorschlags werden die einzelnen Kalkpartikel in der Regel automatisch vom Hintergrundgewebe getrennt. Dieses Trennen der Kalkpartikel von dem jeweiligen Hintergrundgewebe (oder Hintergrund) wird auch als Segmentierung bezeichnet. Anschließend kann eine Berechnung und Auswertung der Form- und Verteilungsmerkmale der Mikroverkalkungen geschehen. Die Segmentierungsergebnisse von konventionellen, vollautomatischen Verfahren zur Trennung einzelner Kalkpartikel von dem Hintergrund sind oftmals unzureichend.

Die Verwendung von Mammographieaufnahmen zeigt in der klinischen Praxis oft eine Reihe von Schwächen. In Gruppen oder Clustern auftretende Mikroverkalkungen sind zwar ein frühes Anzeichen für Brustkrebs, die Unterscheidung zwischen gutartigen und bösartigen Clustern von Mikroverkalkungen basierend auf deren Vorkommen in Mammographieaufnahmen ist oft eine sehr schwierige Aufgabe. Bei der Verwendung dieser konventionellen Verfahren ist es deshalb nicht überraschend, dass typischerweise nur 15 % bis 20 % von Brustbiopsien, die aufgrund von Verkalkungen durchgeführt wurden, eine Bösartigkeit bestätigen. In den USA wurde beispielsweise nur bei 15 - 30 % der durchgeführten Brustbiopsien später eine bösartige Pathologie bestätigt. Dieser niedrige positive Voraussagewert (PPV = positive prediction value) für Mammographieaufnahmen hinsichtlich der Diagnose von (in Gruppen auftretenden) Kalkablagerungen impliziert viele unnötigerweise durchgeführte Biopsien an gutartigen Kalkablagerungen, d.h. es werden bei weitem zu viele Brustbiopsien an Patienten mit gutartigen Gruppen von Mikroverkalkungen durchgeführt. Die unnötigen Biopsien verursachen dabei einen großen mentalen als auch physischen Stress für den jeweiligen Patienten.

In der Vergangenheit wurden Möglichkeiten oder Verfahren in der computer-assistierten Diagnose von Mikroverkalkungen mit dem Ziel vorgeschlagen, die Zuverlässigkeit zu verbessern. Diese konventionellen Verfahren nutzen beispielsweise Zerlegungen des digitalen Bildes der Mammographieaufnahmen unter Verwendung von so genannten Wavelets, mit deren Hilfe insbesondere lokalisierte Strukturen leicht detektierbar sind. Diese konventionellen Verfahren, die vollautomatisch durchgeführt wurden, nutzen eine Schwellwertanalyse, bei der ein globaler Schwellwert (für das gesamte Bild oder eine gesamte Bildregion) von dem Computer bestimmt wird, mit deren Hilfe Mikroverkalkungen von anderen Strukturen des Hintergrundes unterschieden werden sollten.

Effektive automatische Klassifizierungen von Mikroverkalkungen, d.h. die Einteilung in gut- oder bösartigen Verkalkungen, basieren auf eine gute Segmentierung einzelner Kalkablagerung oder Kalkteilchen. Die konventionellen Verfahren basieren auf vollautomatische Segmentierungsverfahren für einzelne Kalkablagerungen. Da jedoch keiner dieser vollautomatischen Verfahren ein optimales Ergebnis für die Segmentierung zeigte, besteht ein Bedarf nach weiteren Methoden, um die Zuverlässigkeit von Klassifizierungen von Mikroverkalkungen und somit die Resultate zu verbessern. Deshalb ist ein neuartiger computer-assistierter Diagnosezugang (CADx) wünschenswert.

Ausgehend von diesem Stand der Technik, liegt der vorliegenden Erfindung die Aufgabe zugrunde, eine Vorrichtung und ein Verfahren zur Segmentierung von Mikroverkalkungen in Mammographieaufnahmen zu schaffen, die eine deutliche Verbesserung hinsichtlich der Diagnose von bösartigen Tumoren erlaubt.

Diese Aufgabe wird durch eine Vorrichtung nach Anspruch 1, und ein Verfahren nach Anspruch 14 gelöst.

Gemäß einem Ausführungsbeispiel der vorliegenden Erfindung wird eine Segmentierung von Mikroverkalkungen dadurch erreicht, dass zunächst eine Bandpassfilterung eines Bildes (Mammographieaufnahme) durchgeführt wird, und daran anschließend eine individuelle Bearbeitung des bandpassgefilterten Bildes in einem oder mehreren Schritte erfolgen kann. Als Resultat wird eine Segmentierung von Mikroverkalkungen erhalten, die optional in einer Auswerteeinheit weiter untersucht werden kann, um die Natur der Mikroverkalkungen (gutartig oder bösartig) mit einer hohen Wahrscheinlichkeit vorherzusagen.

Die Größe von individuellen Kalkteilchen (Mikroverkalkungen) kann einem Gebiet zwischen 0,1 bis 1 mm schwanken, wobei die Kalkteilchen im Allgemeinen einen hohen Grad von Lokalität aufweisen. Die hohe Lokalität zeigt sich dabei in der zuvor beschriebenen hohen Flankensteilheit. Konventionelle Verfahren zur Segmentierung basieren auf dem Fakt, dass Mikroverkalkungen im Bild als ein Gebiet mit hohen raumartigen Frequenzen erscheinen. Wavelet-Transformationen bieten dafür die optimale Möglichkeit, Regionen mit hohen raumartigen Frequenzanteilen in einem Bild festzustellen, und bilden daher die Grundlange für konventionelle Detektionsmechanismen für Mikroverkalkungen.

Der Bandpassfilter kann bei Ausführungsbeispielen dementsprechend auch auf einer Wavelet-Zerlegung basieren und vollautomatisch durch einen Computer bzw. ein Computerprogramm übernommen werden. Die anschließend individuelle Bearbeitung kann durch eine Einrichtung vorgenommen werden, bei der beispielsweise ein Schwellenwert derart gewählt wird, dass möglichst viele Verkalkungen und möglichst wenig Rauschen auf dem Bild erscheint. Weiterhin kann in der Einrichtung zur individuellen Bearbeitung auch bestimmte Mikroverkalkungen vergrößert oder verkleinert werden, z.B. wenn der Radiologe davon ausgeht, dass sie in dem Bild unzureichend dargestellt sind. Die Einrichtung zum individuellen Bearbeiten kann ebenfalls dahingehend genutzt werden, dass bestimmte Mikroverkalkungen oder Teilchen gelöscht oder auch hinzugefügt werden, oder dass ein Teilchen geteilt wird, so dass in der Segmentierung zwei getrennte Mikroverkalkungen auftreten. Diese Bearbeitungsschritte können durch einen Radiologen oder Arzt individuell derart durchgeführt werden, dass sie sowohl für ein gesamtes Gebiet mit Kalbablagerungen als auch für bestimmte Untergebiete, die Mikroverkalkungen enthalten, durchgeführt werden.

Somit beschreiben Ausführungsbeispiele der vorliegenden Erfindung ein halbautomatisches Verfahren zur Segmentierung von Mikroverkalkungen von einem Hintergrundgewebe. Durch den halbautomatischen Ansatz, der im Gegensatz zu dem bekannten vollautomatischen Verfahren, einen gewissen Grad von Interaktionen des Radiologen erfordert, können die Segmentierungsergebnisse im Vergleich zu vollautomatischen Verfahren deutlich verbessert werden. Diese Segmentierung einzelner Kalkpartikel kann, wie gesagt, basierend auf einer vollautomatischen Initialsegmentierung durch intuitive Interaktionsmöglichkeiten des Radiologen oder eines Arztes schrittweise verbessert werden. Die dadurch erhaltene optimierte Segmentierung führt zur Verbesserung der extrahierten Form- und Verteilungsmerkmale (z.B. die die Morphologie und die Verteilung der Kalkpartikel beschreiben), welche wiederum zur Verbesserung eines Diagnosevorschlags (gut-oder bösartig) des CAD-Gerätes führt.

Basierend auf eine digitale Datenbank von Mammographieaufnahmen ist es möglich unter Verwendung der betreffenden Regionen (ROI = regions of interest), die gutartige oder bösartige Cluster von Mikroverkalkungen enthalten, die Performance von Ausführungsbeispielen der vorliegenden Erfindung zur Segmentierung zu bestimmen. Das kann beispielsweise unter Verwendung einer so genannten Stützvektormaschine (support a vector machine) und einer ROC-Analyse (ROC = receiver operating characteristics) geschehen. Die daraus resultierende ROC-Performance ist sehr viel versprechend und die halbautomatische Segmentierung zeigt eine signifikant höhere Performance (Erkennungsrate) als dies bei vergleichbaren vollautomatischen Systemen der Fall ist.

Ausführungsbeispiele der vorliegenden Erfindung basieren somit auf einer halbautomatischen Segmentierung von individuellen Kalkablagerungen oder Kalkteilchen, Merkmalsextraktion und ferner auf klinische Daten und einer Klassifizierung unter Verwendung einer Stützvektormaschine. Die Performance von Ausführungsbeispielen der vorliegenden Erfindung kann unter Zuhilfenahme der digitalen Datenbank für Mammographieaufnahmen (DDSM = digital database for screening mammography) unter Verwendung eines so genannten Leaving-One-Out-Sampling und einer ROC-Kurvenanalysis bestimmt werden.

Ausführungsbeispiele der vorliegenden Erfindung werden nachfolgend Bezug nehmend auf die beiliegenden Zeichnungen näher erläutert. Es zeigen:
- Fig. 1: eine schematische Darstellung einer Vorrich- tung zum Segmentieren von Mikroverkalkungen, die gemäß einem Ausführungsbeispiel imple- mentiert werden kann;
- Fig. 2A, 2B: eine Intensitätsverteilung und eine Filte- rung derselben für eine Mammographieaufnahme entlang einer Raumrichtung;
- Fig. 3: eine gefilterte Intensitätsverteilung einer Verkalkung mit einer Schwellenwertanalyse;
- Fig. 4A, 4B: eine Intensitätsverteilung vor und nach der Schwellenwertanalysis;
- Fig. 5: eine Verkalkung nach einer automatischen Bandpassfilterung;
- Fig. 6: eine individuelle Größenanpassung einer Ver- kalkung;
- Fig. 7: eine Teilung einer Verkalkung in zwei Teile;
- Fig. 8: eine Region einer Mammographieaufnahme mit einer Vielzahl von Kandidaten für Verkalkun- gen;
- Fig. 9A: eine schrittweise Analyse der Region mit
- bis 9D: Verkalkungen, wie sie in der Fig. 8 darge- stellt ist, gemäß Ausführungsbeispielen und
- Fig. 10: eine Darstellung der Rolling-Ball-Methode und der Rolling-Ball-Bandpassfilterung gemäß einem Ausführungsbeispiel der vorliegenden Erfindung.

Bezüglich der nachfolgenden Beschreibung sollte beachtet werden, dass bei den unterschiedlichen Ausführungsbeispielen gleiche oder gleichwirkende Funktionselemente oder Strukturen gleiche oder ähnliche Bezugszeichen aufweisen und somit die Beschreibung dieser Funktionselemente in den verschiedenen Ausführungsbeispiele untereinander austauschbar sind.

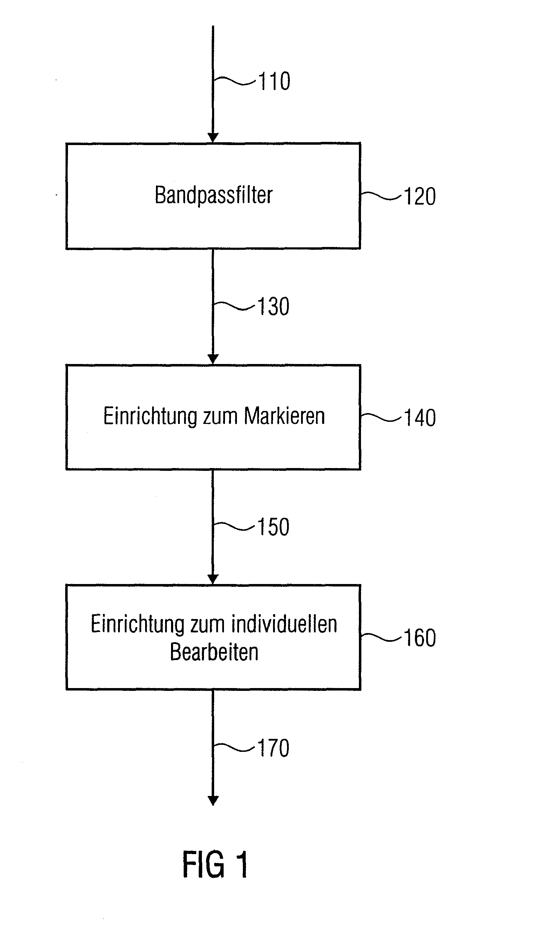

Fig. 1 zeigt eine schematische Darstellung einer Vorrichtung zum Segmentieren von Mikroverkalkungen 105 in einer Mammographieaufnahme 110, die einen Bandpassfilter 120 aufweist, wobei der Bandpassfilter 120 eine Bandpassfilterung der Mammographieaufnahme 110 vornimmt, um eine gefilterte Mammographieaufnahme 130 zu erhalten. Die gefilterte Mammographieaufnahme 130 wird einer Einrichtung zum Markieren 140 zugeführt, die daraus eine markierte Mammographieaufnahme 150 erzeugt. Die markierte Mammographieaufnahme 150 wird schließlich in eine Einrichtung zum individuellen Bearbeiten 160 eingegeben, wobei die Einrichtung zum individuellen Bearbeiten 160 aus der markierten Mammographieaufnahme 150 eine Segmentierung 170 erzeugt.

Die Einrichtung zum Markieren 140 markiert in der gefilterten Mammographieaufnahme 130 eine Menge von Bildpunkten als potentielle Region einer Mikroverkalkung, die einen vorbestimmten Schwellenwert S über- oder unterschreitet (je nach Definition des Schwellenwertes S). Die Einrichtung zum individuellen Bearbeiten 160 ändert beispielsweise die Ausdehnung von Clustern von benachbarten markierten Bildpunkten, so dass die Cluster von Bildpunkten eine Segmentierung von Mikroverkalkungen darstellen. Die Änderung der Ausdehnung kann dabei beispielsweise ein Vergrößern, Verkleinern aber auch ein Erzeugen oder Löschen von potentiellen Mikroverkalkungen aufweisen. Es ist dabei zwischen den Clustern von Bildpunkten, die sich auf eine potentielle Mikroverkalkung beziehen, und den Clustern von Mikroverkalkungen zu unterscheiden. Ferner ist es möglich, dass das individuelle Bearbeiten ein Teilen einer potentiellen Mikroverkalkung in zwei getrennte Mikroverkalkungen umfassen kann.

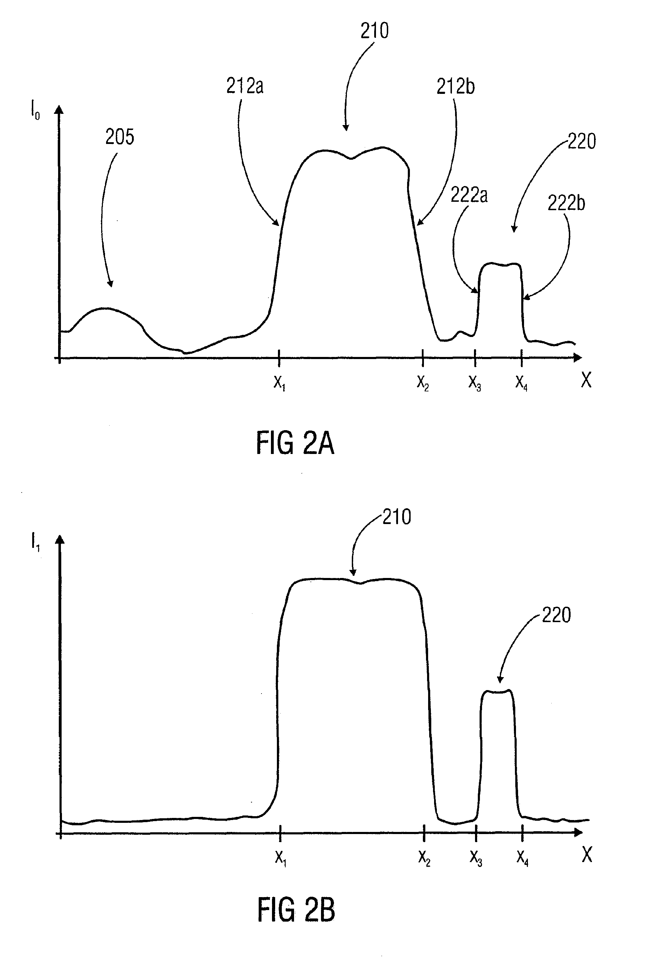

Die Fig. 2A und 2B zeigen Intensitätsverteilungen einer Mammographieaufnahme entlang einer Raumrichtung x, wobei die Intensitätsverteilung I₀ in Fig. 2A vor der Bandpassfilterung und die Intensitätsverteilung I₁ in Fig. 2B nach der Bandpassfilterung gezeigt ist. Die zweite raumartige Richtung wurde in den Darstellungen vernachlässigt, wobei jedoch zu berücksichtigen ist, dass die Analyse zweidimensional geschehen sollte, so dass eine flächenartige Darstellung von potentiellen Mikroverkalkungen möglich ist.

Die Intensitätsverteilung I₀ in Fig. 2A zeigt dabei drei Maxima, ein erstes Maximum 205, ein zweites Maximum 210 und ein drittes Maximum 220. Das zweite Maximum 210 befindet sich zwischen den Werten x₁ und x₂ und weist eine erste Flanke 212a und eine zweite Flanke 212b auf, zwischen denen das Maximum ausgebildet ist. Das dritte Maximum 220 weist eine dritte Flanke 222a bei dem x-Wert x₃ und eine vierte Flanke 222b an dem x-Wert x₄ auf, zwischen denen das dritte Maximum 220 ausgebildet ist. Das zweite Maximum 210 ist dabei größer als das dritte Maximum 220.

Fig. 2B zeigt eine entsprechend bandpassgefilterte Intensitätsverteilung I₁, wobei die Bandpassfilterung derart vorgenommen wurde, dass Gebiete mit nur schwachen Variationen, in denen sich die Intensität nur wenig ändert, herausgefiltert wurden. Andererseits bleiben Gebiete, in denen es zu starken Intensitätsschwankungen kommt, erhalten. Dementsprechend zeigt die Fig. 2B die erste und zweite Flanke 212a und 212b des zweiten Maximums 210 als auch die dritte und vierte Flanke 222a und 222b des dritten Maximums 220. Da die Gebiete zwischen den Flanken (d.h. für x₁ < x < x₂ und für x₃ < x < x₄) potentielle Verkalkungen darstellen, wurden diese Gebiete bei der Bandpassfilterung nicht herausgefiltert, sondern wurden in der entsprechenden gefilterten Intensitätsverteilung I₁ ebenfalls entsprechend markiert. Demzufolge zeigt die gefilterte Intensitätsverteilung I₁ ab dem Wert x₁ einen steigenden Wert auf, der bei dem Wert x₂ wieder fällt, so dass zwischen x₁ und x₂ das zweite Maximum 210 als eine potentielle Mikroverkalkung identifiziert wurde. Das gleiche wurde für das dritte Maximum 220 getan, so dass zwischen den Werten x₃ und x₄ ebenfalls eine von Null verschiedene Intensitätsverteilung I₁ gezeigt ist. Andererseits wurde das erste Maximum 205, das nur eine geringe Flankensteilheit aufweist, herausgefiltert.

Die Filterung kann dementsprechend derart geschehen, dass in der Intensitätsverteilung I₀, wie sie in der Fig. 2A gezeigt ist, alle jene Gebiete vernachlässigt, in denen der Anstieg der Funktion I₀ in Abhängigkeit der Richtung x unterhalb eines bestimmten Schwellenwertes liegt. Eine hohe Flankensteilheit (oder ein hoher Anstieg in der Funktion) zeigen sich in einer Fourier-Analyse in einem verstärkten Auftreten von Anteilen hoher Frequenzen. Dementsprechend kann beispielsweise die Bandpassfilterung derart geschehen, dass Anteile hoher Frequenzen erhalten bleiben, und Anteile niedriger Frequenzen herausgefiltert werden. Dies kann beispielsweise in geeigneter Weise durch eine Wavelet-Transformation zur Bandpassfilterung erreicht werden. Da Wavelet-Transformationen einen bestimmten Frequenzbereich (beispielsweise hohe Frequenzen und somit hohe Flankensteilheiten) effizient herausfiltern können, sind sie besonders für die gewünschte Bandpassfilterung geeignet. Dies ist bei herkömmlichen Fourier-Analysen nicht der Fall.

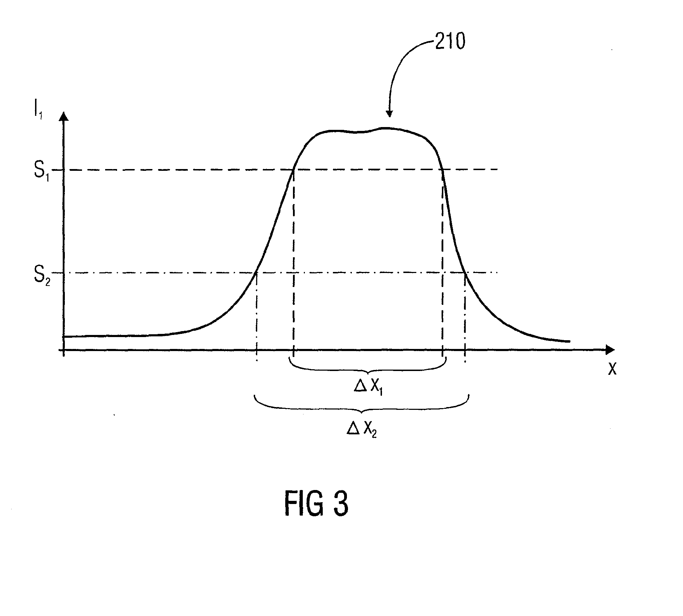

Fig. 3 zeigt ein Beispiel für eine gefilterte Intensitätsverteilung I₁ in Abhängigkeit einer raumartigen Richtung x, wie sie beispielsweise in die Einrichtung zum Markieren 140 eingegeben wird.

Die Fig. 3 zeigt, wie die Einrichtung zum Markieren 140 in der gefilterten Intensitätsverteilung I₁ mittels eines Schwellwertes S potentielle Mikroverkalkungen markiert. Mikroverkalkung entsprechen dabei einem Maximum 210 in der Intensitätsverteilung I₁ (z.B. eine weiße Region in einer Mammographieaufnahme 110). In der Fig. 3 sind zwei mögliche Schwellenwerte, ein erster Schwellenwert S₁ und ein zweiter Schwellenwert S₂ gezeigt. Bei Verwendung des ersten Schwellenwertes S₁ erscheint die potentielle Mikroverkalkung 210 innerhalb des Raumgebietes Δx₁. Bei Verringerung des Schwellenwertes auf einen zweiten Schwellenwert S₂ erscheint die Mikroverkalkung 210 innerhalb des Raumgebietes Δx₂. Somit hat sich das Raumgebiet der Mikroverkalkung 210 bei einer Verringerung des Schwellenwertes entsprechend vergrößert.

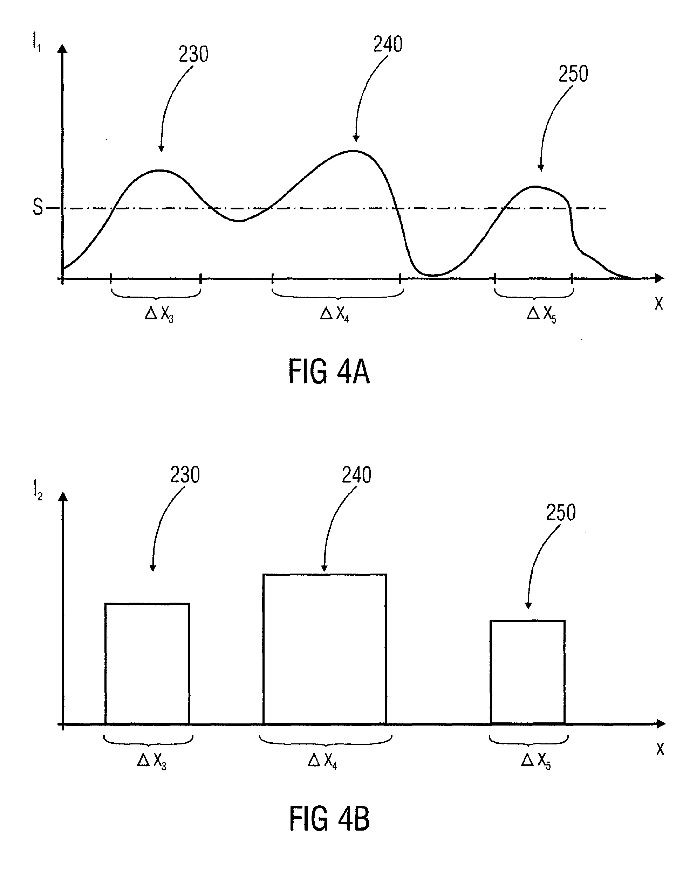

Fig. 4A und 4B veranschaulichen das Resultat der Schwellenwertanalyse, wie sie beispielsweise in der Einrichtung zum Markieren vorgenommen werden kann. Fig. 4A zeigt die gefilterte Intensitätsverteilung I₁, die ein erstes Maximum 230, ein zweites Maximum 240 und ein drittes Maximum 250 aufweist, wobei die Intensitätsverteilung I₁ der Mammographieaufnahme wiederum entlang der x-Richtung darstellt ist. Für die Schwellenwertanalyse wurde ein Schwellenwert S gewählt, so dass das erste Maximum 230 als eine Verkalkung in einem Raumgebiet Δx₃ erscheint, das zweite Maximum 240 als eine Mikroverkalkung entlang des Raumgebietes Δx₄, und das dritte Maximum 250 als eine Mikroverkalkung in einem Raumgebiet Δx₅ erscheint. Alle Werte der Intensitätsverteilung I₁, die unterhalb des Schwellenwertes S liegen, wurden in der markierten Intensitätsverteilung I₂ nicht berücksichtigt, und stattdessen wurden nur jene Bereiche der Intensitätsverteilung I₁ in der markierten Intensitätsverteilung I₂ dargestellt, die oberhalb des Schwellenwertes S liegen, wobei die Stärke der markierten Intensitätsverteilung I₂ einem dementsprechenden Abstand des Maximums von dem Schwellenwert S entspricht.

Bei einer dadurch erhaltenen Darstellung für potentielle Mikroverkalkungen kann es vorkommen, dass Gebiete, die zu einer Mikroverkalkung gehören, als zwei getrennte Gebiete dargestellt werden. Beispielsweise kann es sein, dass das Maximum 230 und 240 nicht zwei getrennten Mikroverkalkungen entspricht, sondern dass sie beide zu einer Mikroverkalkung gehören.

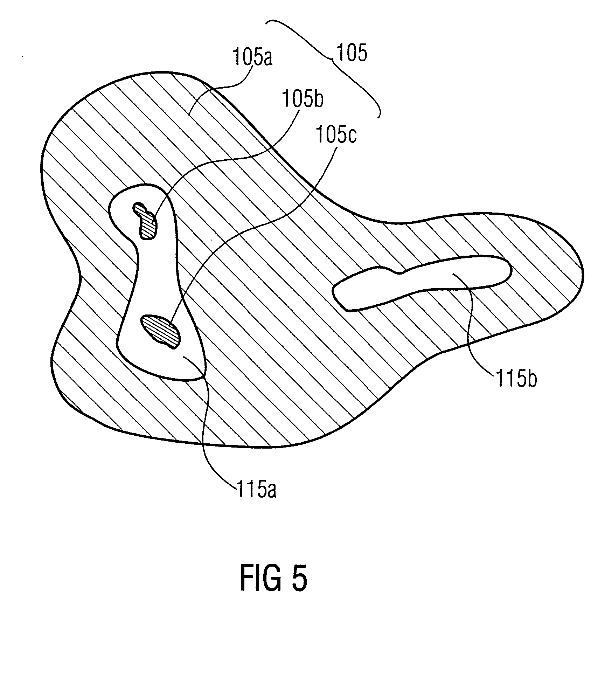

Fig. 5 zeigt ein Beispiel für eine Mikroverkalkung 105, die darstellt, dass die Schwellenwertanalyse, wie sie in Fig. 4A und 4B gezeigt ist, nicht ideal ausgeführt wurde. So weist die Mikroverkalkung 105 einen ersten Hintergrundabschnitt 115a und einen zweiten Hintergrundabschnitt 115b auf, bei dem die Schwellenwertanalyse dazu geführt hat, dass dieser Abschnitt irrtümlicherweise dem Hintergrund zugerechnet wurde, obwohl sie Teile der Mikroverkalkung 105 sind. Dies ist ein typisches Beispiel für den Nachteil eines global gewählten Schwellenwertes, der beispielsweise lokaler Variationen in der Umgebung einer bestimmten Mikroverkalkung unberücksichtigt lässt. Dementsprechend ist es vorteilhaft, wenn solche Mikroverkalkungen "ausgebessert" werden. Diese Ausbesserung kann derart geschehen, dass beispielsweise die irrtümlicherweise als Hintergrund markierten Gebiete 115a und 115b verschwinden. Es ist auch möglich, dass innerhalb der irrtümlicherweise als Hintergrund bezeichneten Gebiete 115a, 115b sich Inseln von weiteren Mikroverkalkungen darstellen, die ebenfalls als ein Artefakt der Schwellenwertanalyse entstehen können.

Derartige Artefakte sind für ein vollautomatisches Programm nur schwer zu erkennen - stellen jedoch für einen Radiologen oder Arzt keine größere Herausforderung dar. Dementsprechend ist es vorteilhaft, wenn der Schwellenwert entsprechend manuell optimiert wird. Die manuelle Optimierung kann hinsichtlich des globalen Schwellenwertes geschehen, aber auch regional in bestimmten Regionen der Mammographieaufnahme 110 geschehen, die beispielsweise durch besonders starkes Rauschen gekennzeichnet sind. Bei dieser manuellen Nachregelung ist stets ein Kompromiss zu finden, um möglichst viele Mikroverkalkungen 105 zu erfassen, andererseits jedoch das Rauschen weitestgehend zu unterdrücken. Ein Beispiel für Rauschen können die irrtümlich zum Hintergrund gehörenden Gebiete 115a, 115b sein.

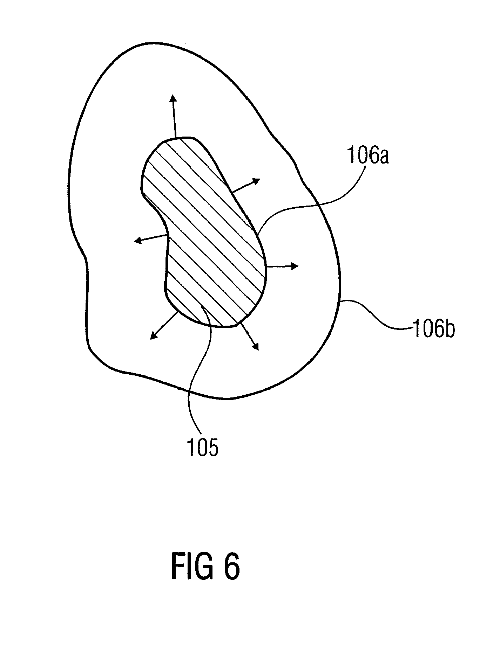

Fig. 6 zeigt ein Ausführungsbeispiel, bei dem das als eine Mikroverkalkung 105 markierte Region hinsichtlich ihrer Größe individuell geändert wird, so dass eine äußere Berandungskurve 106a der Region 105 vergrößert wird und die so entstehende Mikroverkalkung 105 eine vergrößerte Berandungskurve 106b aufweist. Diese Vergrößerung der Mikroverkalkung 105 kann beispielsweise durch einfaches Skalieren erfolgen. Eine andere Möglichkeit die Größe von Kalkteilchen 105 zu verändern ist durch eine lokale Absenkung des entsprechenden Schwellenwertes in einer Umgebung der Mikroverkalkung 105 gegeben (siehe Fig. 3). Die Umgebung kann flexibel einstellbar sein (z.B. durch einen bestimmten Abstand von der Randkurve der Mikroverkalkung 105) oder mittels einer Computermaus markierbar sein. Das Skalieren kann durch eine Längenmassstabsänderung geschehen oder auch durch ein Wachstum der Region - einer so genannten region growing technique - geschehen.

Die Größenänderung einer Mikroverkalkung kann beispielsweise für die in Fig. 5 gezeigten Inseln 105b und 105c geschehen, so dass die als Hintergrund markierte Gebiete 115a, 115b verschwinden. Es ist ebenfalls möglich, dass die Größenänderung dahingehend geschieht, dass eine Mikroverkalkung 105 oder auch ein als Hintergrund markierter Region entsprechend verkleinert wird bzw. ganz verschwindet. Dies kann beispielsweise in der Fig. 5 mit der als Hintergrund markierte Region 115b geschehen. Als Spezialfall ist es dabei ferner möglich, dass eine Mikroverkalkung hinzugefügt wird, das heißt, dass an einem Punkt oder an einer Region, an der vorher noch keine Mikroverkalkung 105 markiert wurden, eine neue Mikroverkalkung entsteht. Umgekehrt kann eine bestehende Mikroverkalkung soweit verkleinert werden bis sie ganz verschwindet.

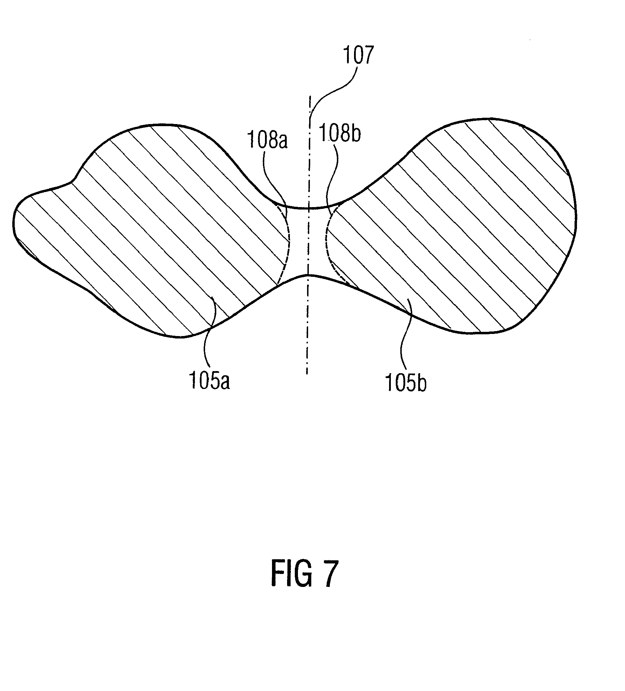

Fig. 7 zeigt eine weitere Möglichkeit einer individuellen Einflussnahme auf die markierten Mikroverkalkung 105. Mit dem in Fig. 7 gezeigten Beispiel, ist es möglich, eine Region, die als eine Mikroverkalkung 105 markiert wurde, in zwei separate Mikroverkalkungen 105a und 105b zu trennen. Das kann beispielsweise dann geschehen, wenn der Radiologe oder Arzt feststellt, dass die Form der Mikroverkalkungen untypisch ist, und dass es sehr viel wahrscheinlicher ist, dass die Verbindung zwischen den beiden Mikroverkalkungen 105a und 105b nur ein Artefakt der Schwellenwertanalyse oder der Bandpassfilterung ist. Die Trennung kann dabei entlang einer Linie 107 erfolgen, die von dem Radiologen vorgegeben wird. Bei der Trennung kann entlang der Trennlinie 107 eine Region entstehen, die nicht als eine Mikroverkalkung markiert ist. Dies kann vollautomatisch durch ein Computerprogramm geschehen, wobei ferner eine Anpassung derart geschehen kann, dass die so entstandenen erste Mikroverkalkung 105a und zweite Mikroverkalkung 105b einen möglichst glatten Rand 108a und 108b aufweisen (z.B. durch konventionelle Glättungsalgorithmen).

Da eine einzelne Mikroverkalkung 105 im Allgemeinen noch kein Hinweis auf eine Tumorerkrankung liefern kann, ist es wichtig, ganze Gebiete (ROI) zu untersuchen. In den folgenden Figuren wird das anhand einer Region 300, die Teil der Mammographieaufnahme 110 ist, gezeigt.

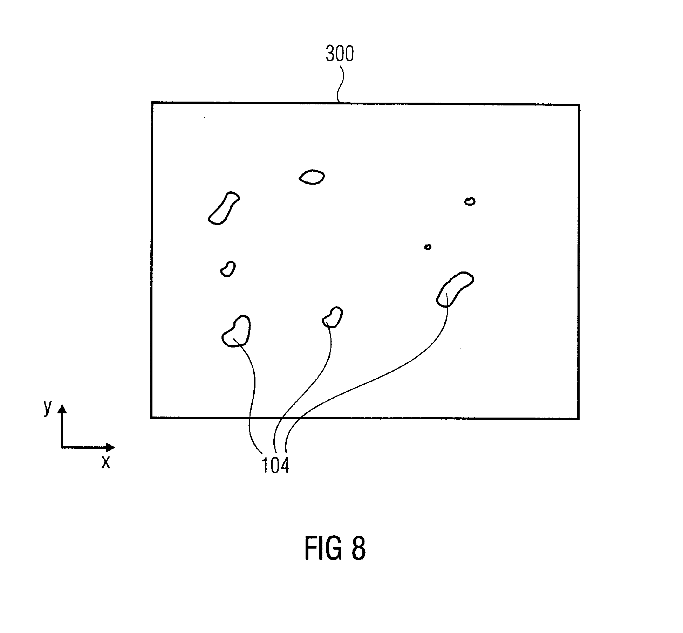

Fig. 8 zeigt zunächst die Region 300, die eine Reihe von Kandidaten 104 für Mikroverkalkungen (ein Cluster von Mikroverkalkungen) aufweist, die im Folgenden segmentiert werden sollen. Dazu ist die Mammographieaufnahme 110 in einer x,y-Ebene angeordnet.

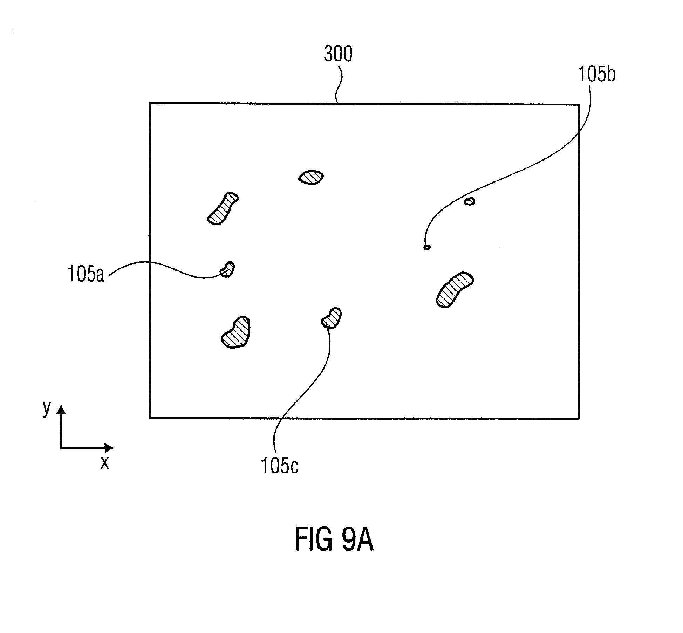

Die Fig. 9A bis 9D zeigen eine mögliche Prozessfolge, wie die Kandidaten der Mikroverkalkung 104 als Mikroverkalkung identifiziert und markiert werden können. Die in der Fig. 8 gezeigten Kandidaten 104 weisen dabei im Allgemeinen keinen scharfen Rand auf, sondern sind stattdessen Gebiete, in denen wahrscheinlich Mikroverkalkungen ausgebildet sind.

Fig. 9A zeigt das Resultat der Bandpassfilterung und der Markierung potentieller Regionen mit Mikroverkalkungen 105. Es entspricht somit der markierten Mammographieaufnahme 150, wie sie aus der Einrichtung zum Markieren 140 ausgegeben wird. Fig. 9A zeigt dabei eine Reihe von markierten Mikroverkalkungen 105a, 105b, 105c, .... Somit zeigt Fig. 9A das Resultat einer automatischen Segmentierung, die als erster Schritt durchgeführt wird. Die entsprechenden Pixel der segmentierten Verkalkungen oder Kalkteilchen sind entsprechend markiert.

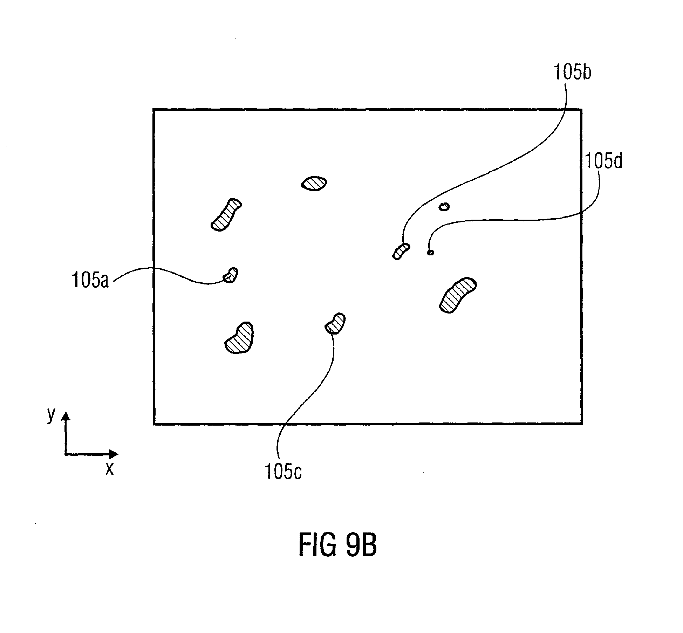

In Fig. 9B ist ein erster Schritt der mittels der Einrichtung zum individuellen Bearbeiten 160 vollzogen werden kann, dargestellt. Dabei wird der Schwellenwert S, der zur Markierung der Mikroverkalkung 105 führte, entsprechend optimiert. Es zeigt sich dabei, dass die in der Fig. 9B gezeigte Mikroverkalkung 105a an Größe gewonnen hat, und ferner, dass neben der Mikroverkalkung 105b eine zweite, benachbarte Mikroverkalkung 105d erschienen ist. Fig. 9B zeigt somit den ersten interaktiven Schritt, der für die Segmentierung angewandt wurde, und der ein Erhöhen (oder Verringern) des Schwellenwertes für das Wavelet bandpassgefilterte Bild beinhaltet (beispielsweise über ein Mausrad).

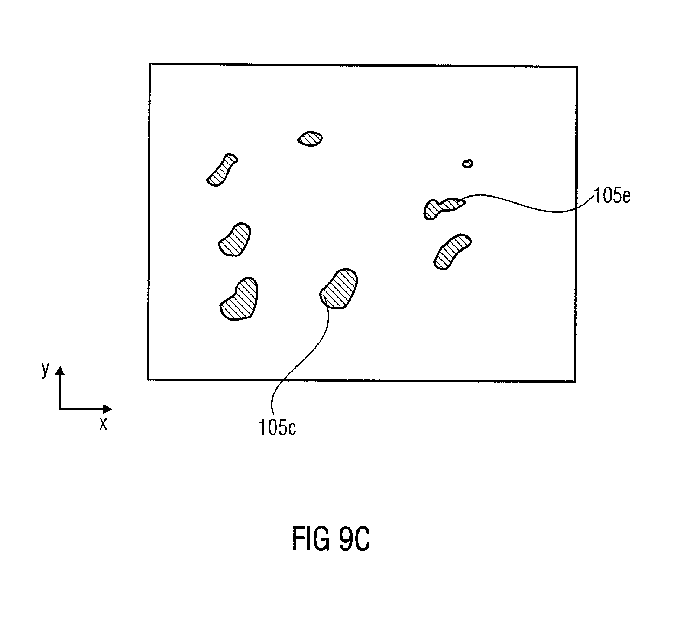

Fig. 9C zeigt eine weitere Einflussnahme während der individuellen Bearbeitung, bei der einzelne Mikroverkalkungen vergrößert oder verkleinert werden können - im Extremfall sogar gelöscht oder hinzugefügt werden. Als Beispiel ist die Mikroverkalkung 105e gezeigt, die im Zuge einer Vergrößerung der Mikroverkalkung 105b/105d aus einer Mikroverkalkung 105e entstanden ist. Ferner ist die Mikroverkalkung 105c vergrößert worden. Die Entscheidung darüber, welche der gezeigten Mikroverkalkungen falsch oder unzureichend dargestellt sind, kann der Radiologe oder Arzt manuell entscheiden, so dass er durch einfaches Markieren einer Region oder durch Klicken einer Maustaste auf der entsprechenden Mikroverkalkung deren Größe entsprechend ändern kann. Bei dem vorliegenden Ausführungsbeispiel sind bei dieser Prozedur die Mikroverkalkungen 105b und 105d zu der Mikroverkalkung 105e verschmolzen.

Fig. 9C zeigt somit die verbesserte Segmentierung, die immer noch nicht perfekt, da sie noch nicht die genaue Gestalt von einigen Teilchen darstellt. Wie beschrieben können individuelle Teilchen weiter vergrößert oder verkleinert werden, indem beispielsweise mit der linken oder rechten Maustaste auf diese Teilchen geklickt wird. Fig. 9C zeigt ferner ein weiteres Artefakt, das darin besteht, dass als Resultat der bis dahin vollzogenen Schritt zwei individuelle Teilchen irrtümlicherweise zu einem großen Teilchen verschmolzen wurden (die Verkalkung 105e). Mit der mittleren Maustaste kann beispielsweise durch ein Klicken auf dieses falsch dargestellte Teilchen eine optimale Trennlinie erzeugt werden, und das Teilchen kann somit in zwei individuelle Teilchen aufgeteilt werden.

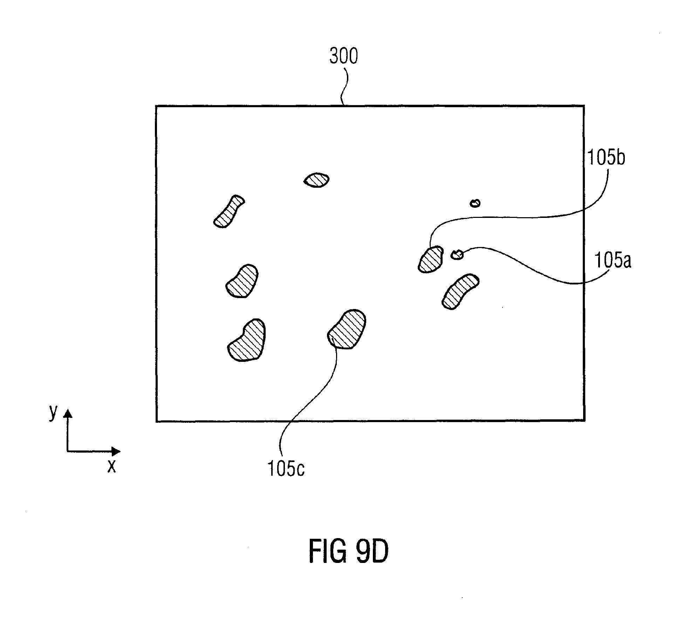

Fig. 9D zeigt eine weitere Einflussnahme, bei der die durch Vergrößerung entstandene Mikroverkalkung 105e wieder in zwei Mikroverkalkungen getrennt wird - der Mikroverkalkung 105b und der Mikroverkalkung 105d. Die Trennung kann dabei wie in Fig. 7 beschrieben geschehen, wobei der Radiologe entscheidet, ob die Trennung sinnvoll ist oder nicht.

Die Fig. 9D zeigt somit eine Segmentierung 170, die durch individuelle Einflussnahme aus der ursprünglich markierten Mammographieaufnahme 150 erhalten wurde. Die Segmentierung 170 kann anschließend einer Auswerteeinheit zur weiteren Analyse und Diagnose hinsichtlich der Gutartigkeit oder Bösartigkeit der Mikroverkalkungen 105 zugeführt werden.

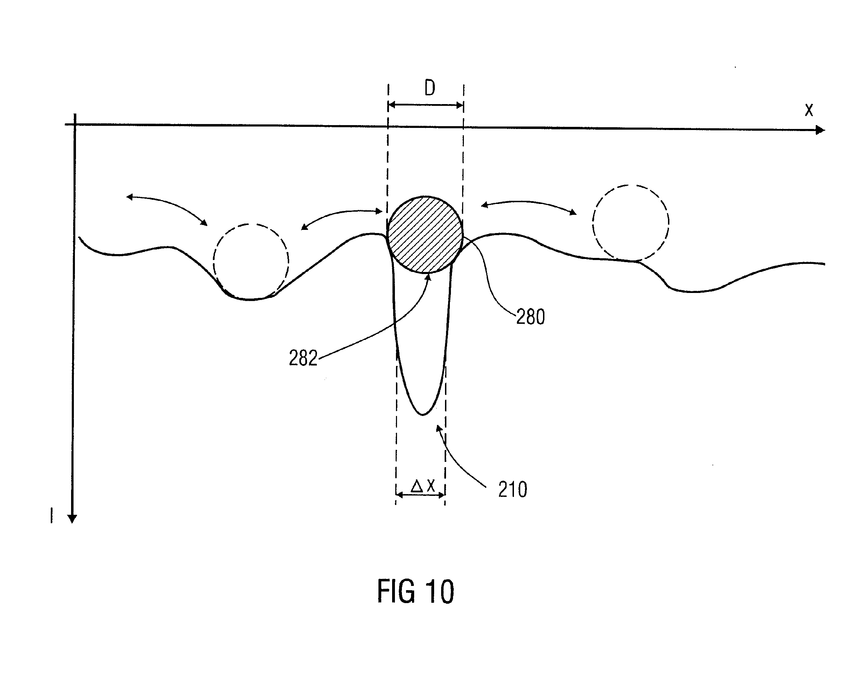

Bei den vorhergehenden Ausführungsbeispielen wurde die Vorabbandpassfilterung durch Auswahl von geeigneten Spektralbändern der Wavlet-Transfomierten durchgeführt. Fig. 10 zeigt ein weiteres Ausführungsbeispiel der vorliegenden Erfindung, bei der die Rolling-Ball-Methode genutzt wird, um zusätzlich oder als Alternative zur Wavelet-Transformation eine Bandpassfilterung vorzunehmen. Dabei ist in Fig. 10 wiederum die Intensität als Funktion einer Ortsvariablen x dargestellt, wobei die Darstellung in der Fig. 10 im Vergleich zu den Darstellungen in den Fig. 2 und 3 entlang der x-Achse gespiegelt wurde (umgekehrte Darstellung). Somit sind Regionen, in denen die Intensität I einen größeren Wert aufweisen und beispielsweise Mikroverkalkungen 105 darstellen können, weiter unten in der Darstellung der Fig. 10 angeordnet und Regionen mit geringerer Intensität liegen näher an der x-Achse und somit in der Fig. 10 weiter oben angeordnet sind. Damit erweist sich eine Mikroverkalkung 105 als ein Minimum 210 in der Darstellung.

Die Anwendung der Rolling-Ball-Methode auf die interessierende Mammographieaufnahme führt zu einer tiefpassgefilterten Version der Mammographieaufnahme, die einen sich langsam ändernden Hintergrund der Aufnahme beschreibt, und wird nachher von der Mammographieaufnahme abgezogen, um zu einer hochpassgefilterten Version zu gelangen, bei der der Hintergrund entfernt wurde. Insbesondere ist das Ergebnis der Anwendung einer Rolling-Ball-Methode auf eine Mammographieaufnahme als eine dreidimensionale Fläche vorstellbar, die beispielsweise der Mittelpunkt einer Kugel 280 beschreibt, wenn derselbe mit einem Durchmesser D entlang der über die Spalten- und Zeilenrichtung aufgespannten dreidimensionalen Intensitätsverteilung I gerollt wird. Je nach Durchmesser D der Kugel ist das Ergebnis mehr oder weniger tiefpassgefiltert.

Wie in der Fig. 10 ersichtlich ist, kann der Durchmesser beispielsweise so eingestellt sein, dass die Kugel 280 außerhalb der Mikroverkalkung 105 stetig über die Intensitätsverteilung I(x) gerollt werden kann, währenddessen die Mikroverkalkung 105 nicht durch die Kugel 280 abtastbar ist. Anders ausgedrückt heißt dies, dass die Intensitätsverteilung I außerhalb der Mikroverkalkung stets mit einem Oberflächenpunkt der Kugel 280 in Verbindung gebracht werden kann, was jedoch innerhalb der Mikroverkalkung 105 in Folge des Durchmessers D der Kugel 280, der größer ist als die Ausdehnung Δx der Mikroverkalkung 105, nicht möglich ist.

Somit können alle Punkte, die nicht zur Mikroverkalkung 105 gehören (d.h. außerhalb des Minimums 210 liegen) und somit von einem Hintergrundgewebe stammen, quasi markiert werden. Nach der Markierung aller Punkte, die durch die Kugel 280 abgetastet werden können (d.h. über die die Kugel 280 rollen kann), bzw. nach Abtasten der Fläche I mit der Kugel 280 kann das damit erhaltene Bild, das den Verlauf des Kugelmittelpunktes beschreibt, von dem Ursprungsbild subtrahiert werden, gegebenenfalls unter zusätzlichem Abzug eines verbleibenden Gleichanteils bzw. Mittelwertes des sich ergebenden Differenzbildes. Als Resultat erhält man eine Darstellung, in der Signale von dem Hintergrundgewebe subtrahiert sind und demzufolge Mikroverkalkungen 105 deutlicher erscheinen.

Es ist ersichtlich, dass für eine effektive Subtraktion des Hintergrundgewebes der Durchmesser D der Kugel 280 ausreichend groß gewählt sein sollte. Insbesondere sollte der Durchmesser D größer sein als eine typische Ausdehnung Δx oder besser eine maximale Ausdehnung einer Mikroverkalkung 105 (d.h. größer als Δx₂ aus der Fig. 3). Somit ist es durch dieses Verfahren ebenfalls möglich, eindeutig Mikroverkalkungen 105 in der ursprünglichen Mammographieaufnahme 300 zu identifizieren.

Das Rolling-Ball-Verfahren ermittelt somit einen glatten oder kontinuierlichen Hintergrund, der von dem Bild (Mammographieaufnahme) entfernt werden kann, und markiert somit lokalisierte Strukturen wie beispielsweise Mikroverkalkungen 105. Das Rolling-Ball-Verfahren kann dabei wie erwähnt derart veranschaulicht werden, dass die Intensitätsverteilung in der Fig. 10 als eine dreidimensionale Oberfläche aufgefasst wird, mit dem Pixelwert (Intensitätswert I) des Bildes als eine Höhe bzw. Tiefe, und die x- und y-Werte als eine Grundfläche erscheinen. Über die so erhaltene Fläche in einem dreidimensionalen Raum, die Höhen und Tiefen aufweist, kann die Kugel 280 über die Rückseite der Intensitätsverteilung gerollt werden und erzeugt damit ein Hintergrundbild, indem alle Punkte/Regionen der Intensitätsverteilung markiert sind, über die die Kugel 280 gerollt werden kann.

Dieses Hintergrundbild kann von dem ursprünglichen Bild der Mammographieaufnahme 110 subtrahiert werden, so dass niederfrequente oder sich langsam ändernde Anteile von einem Gewebe in der Mammographieaufnahme 110 entfernt werden können. Anstatt einer Kugel kann auch ein allgemeines Strukturelement, mit dem sich nur langsam variierende Anteile in der Intensitätsverteilung abtasten lassen, verwendet werden, das sich zudem nicht unbedingt auf der Fläche, die dem Bild entspricht, nicht abrollen muss. Deshalb kann das Verfahren auch als Abtastfilterung mittels Strukturelement oder Strukturelemente-Abtastfilterung bezeichnet werden. Da die Mammographieaufnahme 300 ein zweidimensionales Bild darstellt, kann das Rolling-Ball-Verfahren beispielsweise dahin gehend modifiziert werden, dass anstatt der Kugel in dreidimensionaler Form ein Stift mit einer beispielsweise einer Halbkugel als Abtastspitze verwendet wird.

Optional kann daran anschließend eine Tiefpassfilterung vorgenommen werden, wie z.B. eine Gauss'sche Tiefpassfilterung, um hochfrequente Anteile, die beispielsweise von einem Rauschen herrühren können, von dem Bild zu entfernen. Somit wird insgesamt eine Bandpassfilterung erreicht. Der Radius des rollenden Kugel 280 sollte wie gesagt zumindest so groß gewählt sein wie der Radius des größten Objektes in dem Bild (hier Mikroverkalkung), das kein Teil des Hintergrundes ist, oder so groß wie derjenige Mikroverkalkungsdurchmesser, unterhalb dessen sich in der Verteilung der Mikroverkalkungsdurchmesser ein vorbestimmter Prozentsatz befinden, wie z.B. 95%.

Obwohl die soeben beschriebene Form der Mammographieaufnahmenbandpassfilterung auch ohne die in den vorhergehenden Ausführungsbeispielen beschriebene halbautomatische Segmentierung verwendet werden kann, wie z.B. zur anschließenden Segmentierung von Mikroverkalkungen mittels eines automatisch ermittelten Schwellwertes, kann die so bandpassgefilterte Mammographieaufnahme zusammen mit den oben beschriebenen Benutzereingabemöglichkeiten zu einer sehr akkuraten Segmentierung führen. Dabei kann eine Einstellbarkeit der Bandpassfiltergrenzen mittels beispielsweise des Rollrades der Computermaus vorgesehen sein, indem entsprechend des Drehung des Rades das Ausmaß des Strukturelementes bzw. der Durchmesser der Kugel variiert und jeweils das aktualisierte Ergebnis angezeigt wird, bis eine aktuelle Einstellung durch den Benutzer bestätigt wird, wie z.B. mittels der linken Maustaste.

Weitere Konkretisierungen von Ausführungsbeispielen der erfindungsgemäßen Vorgehensweise bei der Segmentierung und einer möglichen Klassifizierung von Mikroverkalkungen 105 kann auch wie folgt zusammengefasst werden.

Konventionelle Verfahren zur Segmentierung basieren, wie oben bereits beschrieben, auf dem Fakt, dass Mikroverkalkungen im Bild als ein Gebiet mit hohen raumartigen Frequenzen erscheinen. Wavelet-Transformationen bieten dafür die optimale Möglichkeit, Regionen mit hohen raumartigen Frequenzanteilen in einem Bild festzustellen, und bilden daher die Grundlange für konventionelle Detektionsmechanismen für Mikroverkalkungen. Die Kompaktheit und die hohe Regularität von Wavelets der Daubechies-Familie macht diese Wavelets zu einer natürlichen Wahl beim Auffinden von Verkalkungen. Deshalb ist es auch für Ausführungsbeispiele der vorliegenden Erfindung vorteilhaft, ein Bandpassfilter basierend auf einer Wavelet-Transformation mittels Daubechies-6-Wavelets zur Segmentierung zu nutzen. Dabei wird zunächst das Gebiet, welches Cluster von Mikroverkalkungen aufweist, in Unterbänder unter Verwendung der Wavelet-Transformation zerlegt. Anschließend werden jene Bänder, die raumartigen Frequenzen entsprechen, die ober- oder unterhalb einer bestimmten raumartigen Frequenz, die für Verkalkungen oder Kalkteilchen typisch ist, vernachlässigt (herausgefiltert). Anschließend wird eine Rücktransformation der Wavelet-Transformation durchgeführt und als Resultat wird eine bandbassgefilterte Version des Eingangsbildes, d.h. die gefilterte Mammographieaufnahme 130, erhalten. Das dadurch erhaltene, bandpassgefilterte Eingangsbild enthält nicht nur die Mikroverkalkungen, sondern leider auch andere Bildstrukturen, wie beispielsweise ein Rauschen, das zufälligerweise die gleichen raumartigen Frequenzen aufweist, wie ein typisches Kalkteilchen.

Eine vollautomatische Segmentierung von Kalkteilchen kann dadurch geschehen, dass ein Schwellenwert S, der für gewöhnlich lokal adaptiv ist, auf das bandpassgefilterte Bild 130 angewendet wird. In den meisten Fällen ist jedoch die vollautomatische Segmentierung bei weitem nicht perfekt, und stattdessen ist wie gesagt ein interaktiver Segmentierungsschritt als eine Erweiterung für die automatische Segmentierung sinnvoll. Der vollständige Segmentierungsprozess weist somit einen automatischen ersten Schritt und einen interaktiven zweiten Schritt auf, und ist damit halbautomatisch.

Die oben bereits kurz beschriebene interaktive Einflussnahme kann wie folgt zusammengefasst bzw. unter Nutzung einer Computermaus als Teil der Einrichtung zur individuellen Bearbeitung weiter konkretisiert werden.

Zunächst wird bei der vorgeschlagenen interaktiven Erweiterung der Schwellenwert S, der für die Segmentierung verwendet wurde, um Verkalkungen von einem Hintergrund zu separieren, von einem Arzt/Radiologe (oder eines anderen Anwenders) optimiert. Die Optimierung kann beispielsweise mittels eines Computers oder eines Mausrades geschehen. Durch Interaktion ist es zunächst möglich, einen optimalen globalen Schwellenwert zu finden, der für das bestimmte Gebiet (ROI) angewendet werden kann, um eine Diagnose zu stellen. Beispielsweise kann durch ein Drehen des Mausrades der verwendete Schwellenwert kontinuierlich solange verändert werden, bis der Anwender ein gewünschtes Ergebnis erhält.

Der globale Schwellenwert wird jedoch in den meisten Fällen nicht für jedes Teilchen innerhalb einer Gruppe optimal sein. Deshalb ist eine weitere Einflussnahme, um ein gutes Segmentierungsresultat zu erhalten, wünschenswert. Es hat sich gezeigt, dass ein einfach zu verwendendes und trotzdem sehr effektives Verfahren zur Verbesserung der Segmentierung von individuellen Teilchen darin besteht, dass bestimmte Gebiete automatisch vergrößert oder verkleinert werden. Im Detail ist es möglich, dass individuelle Teilchen durch ein Klicken mit der rechten oder linken Maustaste auf das entsprechende Teilchen oder das entsprechende Gebiet vergrößert oder verkleinert werden. Der genaue Betrag und die Richtung des Wachstums (d.h. in welcher räumlichen Richtung das Teilchen wächst) oder der Reduktion einer gegebenen Segmentierung oder einer gegebenen Region von Teilchen kann beispielsweise automatisch unter Verwendung der so genannten region-growing-technique kontrolliert werden.

Unter Verwendung der beiden bisher beschriebenen Interaktionsmöglichkeiten kann somit die Größe der Segmentierungsregion eines Clusters von Teilchen leicht und effektiv durch einen Arzt optimiert werden. Es bleiben jedoch zwei Probleme. Zum Einen, dass Teilchen, die eigentlich Mikroverkalkungen darstellen, im Bild noch nicht dargestellt sind, und zum Anderen ist es möglich, dass das Rauschen irrtümlicherweise zu einem Markieren von Teilchen (Mikroverkalkungen) geführt hat, und zwar insbesondere bei dem anfänglichen Segmentierungsschritt. Beide Probleme können dadurch gelöst werden, dass der Arzt dahingehend einwirkt, dass einzelne Teilchen gelöscht werden - beispielsweise durch ein Klicken des Arztes mit der rechten Maustaste auf das entsprechende Teilchen, das kleiner ist als eine gegebene Größe. Weiterhin kann der Arzt beispielsweise mit einem Klick der linken Maustaste in dem Gebiet oder an den Ort, welches kein Kalkteilchen aufweist, neue Kalkteilchen erzeugen.

Ein weiteres Problem, auf das oben ebenfalls bereits hingewiesen wurde, ist dadurch gegeben, dass es mitunter vorkommt, dass die ursprüngliche Segmentierung dazu führte, dass zwei Teilchen, welche eigentlich getrennte Teilchen darstellen, als ein einheitliches verbundenes Teilchen in dem Bild erscheinen. Dieses Problem wird dadurch gelöst werden, dass ein Teilchen in zwei Teilchen wird, indem beispielsweise der Arzt mit der mittleren Maustaste auf das Teilchen klickt, so dass eine Trennlinie zwischen den beiden zu entstehenden Teilchen entsteht. Die Trennlinie kann beispielsweise automatisch durch ein Computerprogramm erzeugt werden. Schließlich kann durch eine automatische Analyse die Gestalt oder die Ränder der entstehenden Teilchen optimiert werden.

Bei weiteren Ausführungsbeispielen können basierend auf der erhaltenen Segmentierung 170 Merkmale extrahiert werden, auf deren Grundlage eine Diagnose, ob es sich bei den Verkalkungen um gutartige oder bösartige Kalkteilchen handelt, möglich ist. Aus der Segmentierung der individuellen Teilchencluster können sehr viele Merkmale erhalten werden. Die meisten Merkmale umfassen dabei die Morphologie, aber auch die Verteilung der individuellen Teilchen kann extrahiert werden. Hinsichtlich der Form kann dabei beispielsweise zwischen runden oder eckigen Kalkteilchen unterschieden werden, die ferner eng gruppiert oder entlang einer Linie angeordnet sein können. Zusätzlich können weitere klinische Parameter, wie beispielsweise das Alter des Patienten (die beispielsweise in der DDSM-Kommentierung enthalten sind) mit aufgenommen werden. Insgesamt ist es möglich, beispielsweise mehr als 30 Merkmale für eine betreffende ROI-Region zu extrahieren. Da die Dimension des somit erhaltenen Merkmalsvektors mitunter sehr hoch sein kann, kann eine selbst-lernende Technik für die automatische Selektion eines optimalen Unterraumes von Merkmalen angewendet werden. Ein n-dimensionaler Merkmalsvektor, der von einer betreffenden ROI-Region, die Verkalkungscluster enthält, erhalten werden kann, stellt einen Punkt in einem n-dimensionalen Vektorraum dar. Jeder dieser Datenpunkte gehört zu einem von zwei Klassen, die entweder gut- oder bösartig Mikroverkalkungen entsprechen. Die Einteilung und somit die Klassifizierung der Daten kann dadurch erreicht werden, dass eine (n-1)-dimensionale Hyperfläche gefunden wird, die optimal (d. h. mit einem maximalen freien Randgebiet) die gutartigen von den bösartigen Datenpunkten trennt. Da in einem nichttrivialen Fall oft keine optimale Hyperfläche gefunden werden kann, wird stattdessen, eine Stützvektoranalyse (unter Nutzung einer Support-Vector-Machine) vorgenommen. Dabei der Merkmalsraum in einen höher dimensionalen Raum abbildet, in welchem die Hyperfläche leicht gefunden werden kann. Das kann beispielsweise über so genannte Kernel-Funktionen geschehen. Für viele Klassifizierungsaufgaben bilden die Stützvektormaschinen Klassifizierer gute Analysetools und auch für Ausführungsbeispiele der vorliegenden Erfindung stellt eine Stützvektormaschine einen guten Klassifizierer dar, der gut- und bösartigen Clustern von Verkalkungen unterscheiden kann.

Um die Performance der Klassifizierung (einen CADx-Zugang für Mikroverkalkungen) zu bestimmen, kann eine Leaving-One-Out-Abtastung vorgenommen werden, die durch eine ROC-Kurvenanalyse ergänzt werden kann. Die Fläche unter der ROC-Kurve A_{z} wird dabei als eine Performance-Metrik (Maß für die Performance) verwendet. Es zeigt sich, dass die ROC-Berechnung des erfindungsgemäßen Verfahrens der computerunterstützten Diagnose bei der vollautomatischen Segmentierung einen Wert für die Fläche unter der ROC-Kurve liefert: A_{z} = 0,76 ± 0,01. Anderseits ist für eine halbautomatische Segmentierung die Fläche unter der ROC-Kurve signifikant höher, nämlich A_{z} = 0,78 ± 0,01 mit einer statistischen Signifikanz von p < 0,05.

Computer-assistierte Diagnoseverfahren nutzen beispielsweise zur Performance Messung Mammogrammaufnahmen, die von der digitalen Datenbank für Mammographieaufnahmen (DDSM) extrahiert werden können. Die DDSM weist Mammogrammaufnahmen auf, die mittels verschiedener Digitalwandler digitalisiert wurden. Die interessanten markierten ROI-Regionen enthalten bösartige Cluster von Mikroverkalkungen, die von der DDSM-Datenbank extrahiert wurden, und mit "cancer 01", "cancer_02", "cancer_05", "cancer_09", "cancer_15" markiert wurden. Alle ROI, die gutartige Mikroverkalkungen aufweisen, wurden mit "benign_01", "benign_04", "benign_06", "benign_13", "benign_14" markiert. Insgesamt sind 530 ROI-Regionen extrahiert, von denen 224 durch Biopsien überprüfte bösartige Cluster enthalten und die verbleibenden 306 enthalten gutartige Cluster von Mikroverkalkungen.

Zusammenfassend liefern somit Ausführungsbeispiele der vorliegenden Erfindung eine computer-assistierte Diagnose, die es ermöglicht, die Diagnose von gutartigen oder bösartigen Clustern von Mikroverkalkungen festzustellen. Sowohl die vollautomatische als auch die erfindungsgemäße halbautomatische Segmentierung können verwendet werden, um individuelle Kalkteilchen von einem Hintergrundgewebe zu segmentieren. Basierend auf der erfindungsgemäßen Segmentierung ist es möglich, eine große Anzahl von Merkmalen zu extrahieren, die zumeist von der Morphologie als auch von der Verteilung der individuellen Kalkteilchen abhängt. Da der Merkmalsraum eine hohe Dimension aufweist, kann eine automatische Lerntechnik angewendet werden, um einen optimalen Unterraum der Merkmale herauszufinden. Der damit resultierende Merkmalsvektor wird mittels einer Stützvektormaschine klassifiziert. Unter Zuhilfenahme eines Satzes von ROI-Regionen, die Mikroverkalkungen enthalten, und die aus der DDSM-Datenbank erhalten werden können, kann die Performance des erfindungsgemäßen Verfahren sehr gut analysiert werden. Das erfindungsgemäße Verfahren zeigt eine sehr gute ROC-Performance. Dies ist insbesondere deshalb erstaunlich, da Systeme, die Bi-Rads-Attribute (Bi-Rads = Breast Imaging Reporting and Data System) verwenden, eine deutlich schlechtere Performance unter Nutzung der gleichen Daten zeigen, als dies bei Ausführungsbeispielen der vorliegenden Erfindung der Fall ist. Unter Nutzung der halbautomatischen Segmentierung ist nämlich die ROC-Performance signifikant höher als dies bei vergleichbaren vollautomatischen Segmentierungen der Fall ist. Dies zeigt, dass ein einfach zu nutzender interaktiver Segmentierungsprozess, der einen Arzt oder einen Radiologen involviert, nicht nur die Qualität der Segmentierung der einzelnen Teilchen verbessert, sondern darüber hinaus auch die Nützlichkeit der Merkmale, die auf der Basis der Segmentierung extrahiert werden können, verbessert.

Insbesondere wird darauf hingewiesen, dass abhängig von den Gegebenheiten das erfindungsgemäße Schema auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt kann die Erfindung somit als ein Computerprogramm mit einem Programmcode zur Durchführung des Verfahrens realisiert werden, wenn das Computerprogramm auf einem Computer abläuft.

Obige Ausführungsbeispiele beschrieben somit unter anderem auch eine Vorrichtung zum Segmentieren von Mikroverkalkungen in einer Mammographieaufnahme, mit einem Bandpassfilter zum Bandpassfiltern der Mammographieaufnahme, um die gefilterte Mammographieaufnahme zu erhalten; einer Einrichtung zum Markieren von Bildpunkten in der gefilterten Mammographieaufnahme, die einen vorbestimmten Schwellenwert überschreiten oder unterschreitet, um potentielle Regionen von Mikroverkalkungen zu markieren; und einer Einrichtung zum individuellen Bearbeiten einer der Regionen aus benachbarten markierten Bildpunkten, um eine Ausdehnung der einen Region zu ändern, um eine Segmentierung von Mikroverkalkungen zu erhalten. Dabei kann die Einrichtung zum individuellen Bearbeiten ausgebildet sein, eine Region einer Mikroverkalkung in eine erste Mikroverkalkung und eine zweite Mikroverkalkung zu trennen. Das Trennen kann mittels Einfügen einer Trennlinie und durch ein Glätten eines Randes der ersten oder zweiten Mikroverkalkung bewirkt werden. Die Vorrichtung kann auch ferner eine Auswerteeinheit aufweisen, die ausgebildet ist, die Segmentierung einzulesen, und eine Wahrscheinlichkeitsaussage zu treffen, die die eingelesene Segmentierung als gutartig oder bösartig klassifiziert. Die Auswerteeinheit kann dabei ausgebildet sein, eine Stützvektormaschine für die Klassifikation zu nutzen. Der Bandpassfilter kann ausgebildet sein, eine Wavelet-Bandpassfilterung vorzunehmen und/oder Daubechies-6-Wavelets für die Wavelet-Bandpassfilterung zu nutzen. Die Einrichtung zum individuellen Bearbeiten (160) kann auch so ausgebildet sein, dass das individuelle Bearbeiten manuell ausführbar ist. Die Einrichtung zum individuellen Bearbeiten kann eine Computermaus aufweisen. Die Computermaus kann dabei ein Mausrad aufweisen und die Einrichtung zum individuellen Bearbeiten ausgebildet sein, durch ein Drehen des Mausrades den Schwellwert kontinuierlich zu ändern. Die Einrichtung zum Markieren kann ausgebildet sein, durch ein Klicken mit einer Maustaste auf eine Region einer Mikroverkalkung ein Wachsen oder ein Schrumpfen der Region der Mikroverkalkung zu bewirken. Die Einrichtung zum individuellen Bearbeiten kann auch ausgebildet sein, durch ein Klicken mit einer weiteren Maustaste auf eine Mikroverkalkung ein Teilen der Mikroverkalkung in eine erste Mikroverkalkung und eine zweite Mikroverkalkung zu bewirken.

Obige Ausführungsbeispiele beschrieben aber unter anderem auch ein Verfahren zum Segmentieren von Mikroverkalkungen in einer Mammographieaufnahme, mit Bandpassfiltern der Mammographieaufnahme, um eine gefilterte Mammographieaufnahme zu erhalten; Markieren von Bildpunkten in der gefilterten Mammographieaufnahme als potentielle Region einer Mikroverkalkung, die einen vorbestimmten Schwellenwert überschreiten; und individuellem Bearbeiten von Clustern aus benachbarten markierten Bildpunkten, um eine Ausdehnung von Clustern zu ändern, so dass die Cluster einer Segmentierung von Mikroverkalkungen darstellen. Dabei kann der Schritt des individuellen Bearbeitens ein Optimieren des Schwellenwerts umfassen, wobei das Optimieren dahingehend ausgeführt wird, dass die Segmentierung viele Mikroverkalkungen und wenig Rauschen aufweist. Der Schritt des individuellen Bearbeitens kann manuell ausgeführt werden.

## Patentansprüche

1. Vorrichtung zum Segmentieren von Mikroverkalkungen (105) in einer Mammographieaufnahme (110), mit:
einem Strukturelement-Abtastfilter zum Filtern der Mammographieaufnahme (110), um eine gefilterte Mammographieaufnahme (130) zu erhalten;
einer Einrichtung zum Markieren (140) von Bildpunkten in der gefilterten Mammographieaufnahme (130), die einen vorbestimmten Schwellenwert (S) überschreiten oder unterschreiten, um potentielle Regionen von Mikroverkalkungen (105) zu markieren.

2. Vorrichtung gemäß Anspruch 1, bei der das Struktur-Abtastfilter ausgebildet ist, um zur Filterung der Mammographieaufnahme
eine über eine Zeilen- und Spaltenrichtung aufgespannte dreidimensionale Intensitätsverteilung mit einem Strukturelement abzutasten, um eine tiefpassgefilterte Version der Mammographieaufnahme zu erhalten, die das Strukturelement beim Abtasten der dreidimensionalen Intensitätsverteilung beschreibt,
die tiefpassgefilterte Version von der Mammographieaufnahme abzuziehen, um eine hochpassgefilterte Version der Mammographieaufnahme zu erhalten, und
die hochpassgefilterte Version einer Tiefpassfilterung zur Rauschentfernung zu unterziehen, um eine bandpassgefilterte Version der Mammographieaufnahme zu erhalten.

3. Vorrichtung nach Anspruch 2, bei der das Struktur-Abtastfilter so ausgebildet ist, dass
das Strukturelement (280) eine Kugel ist,
das Abtasten ein Rollen der Kugel über die dreidimensionale Intensitätsverteilung ist, und
die tiefpassgefilterte Version durch den Mittelpunkt des Kugel beim Rollen über die dreidimensionale Intensitätsverteilung beschrieben wird.

4. Vorrichtung gemäß Anspruch 3, bei der das Struktur-Abtastfilter so ausgebildet ist, dass die Kugel einen Radius aufweist, der größer ist als ein Mikroverkalkungsdurchmesser, unterhalb dessen sich 95% einer Verteilung der Mikroverkalkungsdurchmesser in der Mammographieaufnahme befinden.

5. Vorrichtung gemäß einem der Ansprüche 2 bis 4, bei der das Struktur-Abtastfilter so ausgebildet ist, dass die Tiefpassfilterung, der die hochpassgefilterte Version der Mammographieaufnahme unterzogen wird, eine Gauß'sche Tiefpassfilterung ist.

6. Vorrichtung gemäß Anspruch 3, bei der das Struktur-Abtastfilter so ausgebildet ist, dass dem Benutzer die Bandpassfiltergrenzeneinstellung durch Variation des Ausmaßes des Strukturelements mittels Drehung eines Rollrades einer Computermaus ermöglicht wird.

7. Vorrichtung gemäß einem der vorhergehenden Ansprüche, die ferner folgendes Merkmal aufweist:
eine Einrichtung zum individuellen Bearbeiten (160) einer der Regionen aus benachbarten markierten Bildpunkten, um eine Ausdehnung der einen Region zu ändern, um eine Segmentierung (170) von Mikroverkalkungen (105) zu erhalten.

8. Vorrichtung nach Anspruch 7, bei der die Einrichtung zum individuellen Bearbeiten (160) ausgebildet ist, eine Umgebung einer Mikroverkalkung (105) zu markieren und unterschiedlich zu bearbeiten.

9. Vorrichtung nach Anspruch 7 oder Anspruch 8, bei der die Einrichtung zum Markieren (140) so ausgebildet ist, dass der Schwellenwert (S) manuell einstellbar ist.

10. Vorrichtung nach einem der Ansprüche 7 bis 9, bei der die Einrichtung zum individuellen Bearbeiten (160) ausgebildet ist,
eine Region einer Mikroverkalkung (105) zu vergrößern oder zu verkleinern,
eine Region einer Mikroverkalkung (105) zu entfernen oder eine weitere Mikroverkalkung hinzuzufügen, und/oder
eine Region einer Mikroverkalkung (105) in eine erste Mikroverkalkung (105a) und eine zweite Mikroverkalkung (105b) zu trennen.

11. Vorrichtung nach Anspruch 10, bei der die Einrichtung zum individuellen Bearbeiten (160) ausgebildet ist, das Vergrößern oder Verkleinern mittels einer lokalen Änderung des Schwellenwertes (S) in einer Umgebung der Mikroverkalkung (105) zu bewirken.

12. Vorrichtung nach Anspruch 11, bei der die Einrichtung zum individuellen Bearbeiten (160) ausgebildet ist, das Vergrößern oder Verkleinern mittels eines Skalierens der markierten Region zu bewirken.

13. Vorrichtung nach einem der vorhergehenden Ansprüche, bei dem der Strukturelement-Abtasters ausgebildet ist, um einen tiefpassgefilterten Hintergrund der Mammographieaufnahme (110) durch Abtasten mittels eines Strukturelements zu bestimmen und von der Mammographieaufnahme abzuziehen, um eine hochpassgefilterte Mammographieaufnahme zu erhalten, und
die hochpassgefilterte Mammographieaufnahme einer Tiefpassfilterung zu unterziehen, um Rauschen aus der Mammographiaufnahme (110) herauszufiltern und eine bandpassgefilterte Mammographieaufnahme zu erhalten.

14. Verfahren zum Segmentieren von Mikroverkalkungen (105) in einer Mammographieaufnahme (110), mit:
einem Abtasten, mittels eines Strukturelementes (280), der Mammographieaufnahme (110) und Abziehen eines so erhaltenen Hintergrundes von der Mammographieaufnahme, um eine hochpassgefilterte Mammographieaufnahme zu erhalten;
einem Tiefpassfiltern der hochpassgefilterten Mammographieaufnahme, um hochfrequente Rauschanteile herauszufiltern und eine gefilterte Mammographieaufnahme (130) zu erhalten; und
Markieren (140) von Bildpunkten in der gefilterten Mammographieaufnahme (130), die einen vorbestimmten Schwellenwert (S) überschreiten oder unterschreiten, um potentielle Regionen von Mikroverkalkungen (105) zu markieren.

15. Computerprogramm mit einem Programmcode zur Durchführung des Verfahrens nach Anspruch 14, wenn das Computerprogramm auf einem Computer abläuft.
